# EUROPÄISCHE PATENTSCHRIFT

(11) **EP 2 660 391 B1**
(45) Veröffentlichungstag und Bekanntmachung des Hinweises auf die Patenterteilung: **19.11.2014**
(21) Anmeldenummer: 13160401.9
(22) Anmeldetag: 21.03.2013
(51) Int. Cl.: E01C 19/20

(54) **Winterdienst-Streugerät**
Spreading apparatus for winter service
Appareil d'épandage pour service d'hiver

(30) Priorität: 04.05.2012 DE 202012101647 U
(43) Veröffentlichungstag der Anmeldung: 06.11.2013
(73) Patentinhaber: Gmeiner GmbH, 92533 Wernberg-Köblitz (DE)
(72) Erfinder: Wilfried Müller, 77704 Oberkirch (DE)
(74) Vertreter: Graf Glück Kritzenberger

(56) Entgegenhaltungen:
- DE-C1- 4 004 213
- FR-A- 1 496 890
- US-A- 4 108 010

## Beschreibung

Die Erfindung betrifft ein Winterdienst-Streugerät gemäß dem Oberbegriff des Patentanspruches 1.

Winterdienst-Streugeräte sind hinreichend bekannt. Diese werden vorzugsweise auf ein Trägerfahrzeug für den Winterdienst montiert und über zumindest ein Getriebe durch einen Antrieb, vorzugsweise einem Hydraulikantrieb des Trägerfahrzeuges angetrieben. Derartige ein Winterdienst-Streugeräte aufweisendes Trägerfahrzeuge werden zur Glättebekämpfung im Winter eingesetzt, und zwar zur Verteilung von Streugut, insbesondere Split, Salz oder eines Salz-Split-Gemisches.

Herkömmliche Winterdienst-Streugeräte weisen einen Streugut-Vorratsbehälter, eine Streugut-Fördereinrichtung und eine von dieser beschickte Streueinrichtung mit zumindest einem Streuteller auf, über welchen das vom Streugut-Vorratsbehälter über die Streugut-Fördereinrichtung an die Streueinrichtung geförderte Streugut über die Straße verteilt wird. Zur Förderung des Streugutes vom Vorratsbehälter an die Streueinrichtung weist die Streugut-Fördereinrichtung üblicherweise zumindest einen Schneckenförderer auf. Derartige Winterdienst-Streugeräte sind beispielsweise aus der DE 10 2005 012 886 A1 bekannt.

Die amerikanische Patentanmeldung US 4 108 010 A offenbart ein Winterdienst-Streugerät, bei dem die Fördereinrichtung über zwei Hydraulikzylinder angetrieben wird, um ein hohes Losbrechmoment bereitzustellen.

Problematisch beim Betrieb derartiger Winterdienst-Streugeräte ist insbesondere, dass das Streugut bzw. Streumaterial in unterschiedlicher Zusammensetzung vorkommen kann. So ist es wünschenswert, mit derartigen Winterdienst-Streugeräten sowohl grobes, schweres als auch leichtes Streugut bzw. Streumaterial verarbeiten zu können. Abhängig von der Konsistenz des Streugutes wirken auf Streugut-Fördereinrichtung unterschiedliche Materiallasten, so ist beispielsweise zur Verarbeitung von schweren, groben Streumaterial ein höheres Antriebsmoment bei einer geringeren Drehzahl erforderlich, wohingegen bei leichten, rieselfähigen Streugut eine hohe Durchsatzmenge im Vordergrund steht, welche durch ein geringeres Drehmoment mit einer höheren Drehzahl realisierbar ist.

Aufgabe der Erfindung ist es daher, ein Winterdienst-Streugerät anzugeben, welches schnell und einfach an die Beschaffenheit des vorliegenden Streugut anpassbar ist, insbesondere ein Losbrechen von schweren, groben Streugut bei gleichzeitiger Bereitstellung einer hohen Fördermenge nach dem Losbrechen des Streugutes ermöglicht. Die Aufgabe wird ausgehend von den Merkmalen des Oberbegriffes des Patentanspruches 1 durch dessen kennzeichnende Merkmale gelöst.

Der wesentliche Aspekt des erfindungsgemäßen Winterdienst-Streugerätes ist darin zu sehen, dass die Getriebeeinheit als Lastschaltgetriebe ausgebildet ist. Vorteilhaft ist bei Einsatz des erfindungsgemäßen Lastschaltgetriebes, welches unter Last schaltbar ist, das von der Getriebeeinheit auf die Streugut-Fördereinrichtung übertragende Abtriebsmoment an die Beschaffenheit des Streugutes anpassbar. Vorteilhaft kann dadurch zum Losbrechen des beispielsweise aufgrund Nässe schweren Streugutes ein höheres Antriebsmoment bei einer geringeren Drehzahl an der Streugut-Fördereinrichtung angelegt werden, welches nach erfolgten Losbrechen zur Erhöhung der Förderleistung unter gleichzeitiger Erhöhung der Drehzahl wieder reduziert wird. Hierzu ist Lastschaltgetriebe zur Erzeugung eines Abtriebsmomentes ausgebildet.

Besonders vorteilhaft ist das Lastschaltgetriebe in Form eines Stirnradgetriebes mit zumindest zwei Stirnradstufen ausgebildet, wobei zum Antrieb der ersten Stirnradstufe eine Rutschkupplung vorgesehen ist.

Weiterhin vorteilhaft ist die Streugutfördereinrichtung in Form eines Schneckenförderers mit zumindest einer Förderschnecke ausgebildet ist, wobei das vom Lastschaltgetriebe erzeugte Abtriebsmoment eine Drehung der Förderschnecke um eine sich im Wesentlichen in Längsrichtung des Winterdienst-Streugerätes erstreckende Achse bewirkt.

Gegenstand der Erfindung ist ebenfalls ein Winterdienstfahrzeug umfassend ein erfindungsgemäßes Winterdienst-Streugerät.

Zudem ergeben sich Weiterbildungen, Vorteile und Anwendungsmöglichkeiten der Erfindung auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

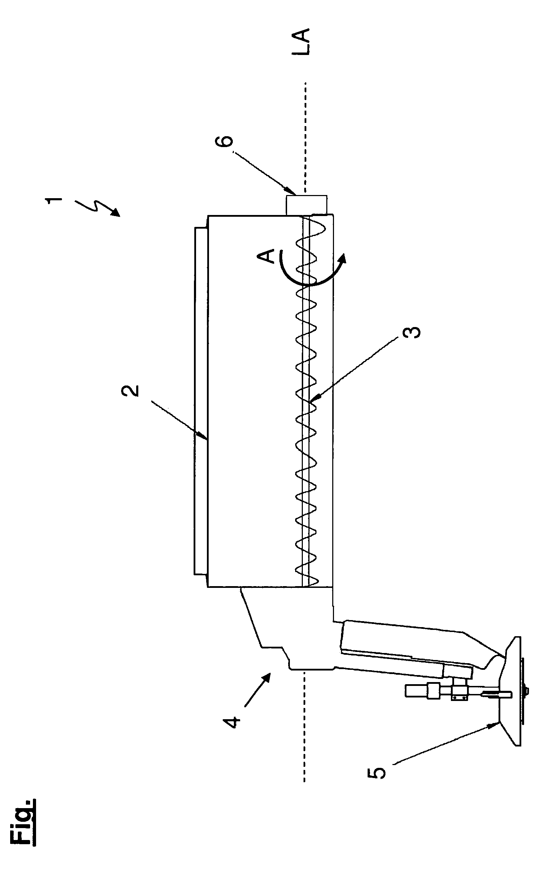

In der Figur ist beispielhaft eine schematische Seitenansicht eines erfindungsgemäßen Winterdienst-Streugerätes 1 dargestellt, dass insbesondere dazu eingerichtet ist, auf ein herkömmliches Trägerfahrzeug bzw. Winterdienstfahrzeug aufgebaut zu werden. Der Aufbau derartiger Trägerfahrzeuge bzw. Winterdienstfahrzeuge ist hinlänglich aus dem Stand der Technik bekannt.

Das Winterdienst-Streugerät 1 weist einen Streugut-Vorratsbehälter 2, zumindest eine Streugut-Fördereinrichtung 3 und eine von dieser beschickte Streueinrichtung 4 mit zumindest einem Streuteller 5 auf, wobei die Streugut-Fördereinrichtung 3 über eine Getriebeeinheit 6 angetrieben wird. Das Winterdienst-Streugerät 1 kann beispielsweise auf einer rahmenartigen Trägerstruktur montiert sein, welche im vorliegenden Ausführungsbeispiel nicht dargestellt ist.

Die Streugut-Fördereinrichtung 3 ist im Bereich des Bodens des Streugut-Vorratsbehälters 2 vorgesehen und vorzugsweise in Form einer Schneckenfördereinrichtung ausgebildet. Die Schneckenfördereinrichtung umfasst zumindest einen oder zwei Schneckenförderer.

Die Streugut-Fördereinrichtung 3 ist zum Fördern des im Streugut-Vorratsbehälter 2 aufgenommenen Streugutes entlang der Längsachse LA des Winterdienst-Streugerätes 1 vorgesehen, und zwar vorzugsweise von der stirnseitig angeordneten Getriebeeinheit 6 in Richtung der Streueinrichtung 4, welche mit dem Streugut beaufschlagt wird und dieses zur Verteilung an den Streuteller 5 weiterfördert.

Durch die Getriebeeinheit 6 wird auf die im vorliegenden Ausführungsbeispiel in Form eines Schneckenförderers ausgebildete Streugut-Fördereinrichtung 3 ein Abtriebsmoment A angelegt, welches eine Drehung des Schneckenförderers um eine sich im wesentlichen in Längsrichtung LA des Winterdienst-Streugerätes 1 erstreckende Achse bewirkt. Das Antriebsmoment des auf einem Trägerfahrzeug vorgesehenen Antriebes, beispielsweise eines Hydraulikmotors, wird mittels der Getriebeeinheit 6 in das Abtriebsmoment A umgesetzt.

Erfindungsgemäß ist die Getriebeeinheit 6 in Form eines Lastschaltgetriebes ausgebildet, welches vorzugsweise zumindest zwei Schaltstufen aufweist. Die zumindest zwei Schaltstufen des Lastschaltgetriebes 6 sind entweder über eine in der Figur nicht dargestellte Schaltvorrichtung wählbar oder Schalten abhängig vom Vorliegen eines vorgegebenen Drehmomentes des Antriebes automatisch.

In einer bevorzugten Ausführungsvariante ist das Lastschaltgetriebe in Form eines Stirnradgetriebes mit zumindest einer ersten und zweiten Stirnradstufe ausgebildet. Das Stirnradgetriebe ist unter Last von der ersten auf die zweite Stirnradstufe umschaltbar.

Das Umschalten zwischen der ersten und zweiten Stirnradstufe erfolgt mittels einer Rutschkupplung in der ersten Stirnradstufe, und zwar löst die Rutschkupplung bei Vorliegen eines vorgegebenen Drehmomentes aus, welches vorzugsweise knapp unterhalb des maximalen Antriebsmomentes liegt. Dadurch greift ein Freilauf in der zweiten Stirnradstufe und der Abtrieb erfolgt über die zweite Stirnradstufe. Sinkt das Antriebsmoment wieder unter das vorgegebene Drehmoment, so erfolgt der Abtrieb wieder über die erste Stirnradstufe. Das vorgegebene Drehmoment beträgt beispielsweise zwischen 300 Nm und 500 Nm, bei einem Antriebsdrehmoment von 350 Nm bis 550 Nm. Das Abtriebsmoment A der zweiten Stirnradstufe ist im Vergleich zur ersten Stirnradstufe um das 1,5 bis 2-fache höher.

In einer bevorzugten Ausführungsvariante weist das Stirnradgetriebe in der ersten Stirnradstufe ein Übersetzungsverhältnis von 1,94:1 und in der zweiten Stirnradstufe ein Übersetzungsverhältnis von 3,31:1 auf.

Die Erfindung wurde voranstehend an einem Ausführungsbeispiel beschrieben. Es versteht sich, dass zahlreiche Modifikationen und Änderungen der Erfindung möglich sind, ohne dass hierdurch der Erfindungsgedanke verlassen wird.

### Bezugszeichenliste

- 1: Winterdienst-Streugerät
- 2: Streugut-Vorratsbehälter
- 3: Streugut-Fördereinrichtung
- 4: Streueinrichtung
- 5: Streutel ler
- 6: Getriebeeinheit, Lastgetriebeeinheit

- LA: Längsachse
- A: Abtriebsmoment

## Patentansprüche

1. Winterdienst-Streugerät (1) umfassend einen Streugutvorratsbehälter (2), zumindest eine Streugut-Fördereinrichtung (3) und eine von dieser beschickte Streueinrichtung (4) mit zumindest einem Streuteller (5), wobei die Streugut-Fördereinrichtung (3) über zumindest eine Getriebeeinheit (6) angetrieben wird, **dadurch gekennzeichnet, dass** die Getriebeeinheit als Lastschaltgetriebe (6) ausgebildet ist.

2. Winterdienst-Streugerät nach Anspruch 1, **dadurch gekennzeichnet, dass** das Lastschaltgetriebe (6) in Form eines Stirnradgetriebes mit zumindest zwei Stirnradstufen realisiert ist.

3. Winterdienst-Streugerät nach Anspruch 2, **dadurch gekennzeichnet, dass** in der ersten Stirnradstufe eine Rutschkupplung vorgesehen ist.

4. Winterdienst-Streugerät nach einem der Ansprüche 1 bis 3, **dadurch gekennzeichnet, dass** die Streugut-Fördereinrichtung (3) in Form eines Schneckenförderers mit zumindest einer Förderschnecke ausgebildet ist.

5. Winterdienst-Streugerät nach einem der Ansprüche 1 bis 4, **dadurch gekennzeichnet, dass** das Lastschaltgetriebe (6) ausgehend von einem vorgegebenen Antriebsmoment zur Erzeugung eines Abtriebsmomentes (A) ausgebildet ist.

6. Winterdienst-Streugerät nach Anspruch 5, **dadurch gekennzeichnet, dass** das Abtriebsmoment (A) eine Drehung der Förderschnecke um eine sich im wesentlichen in Längsrichtung (LA) des Winterdienst-Streugerätes (1) erstreckende Achse bewirkt.

7. Winterdienst-Streugerät nach einem der Ansprüche 2 bis 6, **dadurch gekennzeichnet, dass** das Umschalten zwischen der ersten und zweiten Stirnradstufe unter Last erfolgt.

8. Winterdienstfahrzeug umfassend ein Winterdienst-Streugerät (1) nach einem der vorhergehenden Ansprüche.

## Claims

1. A winter service spreading apparatus (1) comprising a spreading material storage container (2), at least one spreading material conveying device (3) and a spreading device (4) charged by the latter, with at least one spreading plate (5), wherein the spreading material conveying device (3) is driven via at least one gear unit (6), **characterized in that** the gear unit is constructed as a power shift gear (6).

2. The winter service spreading apparatus according to claim 1, **characterized in that** the power shift gear (6) is realized in the form of a spur gear with at least two spur gear stages.

3. The winter service spreading apparatus according to claim 2, **characterized in that** a slipping clutch is provided in the first spur gear stage.

4. The winter service spreading apparatus according to one of claims 1 to 3, **characterized in that** the spreading material conveying device (3) is constructed in the form of a screw conveyor with at least one conveying screw.

5. The winter service spreading apparatus according to one of claims 1 to 4, **characterized in that** the power shift gear (6) is formed for the generation of an output torque (A) based on a predetermined drive torque.

6. The winter service spreading apparatus according to claim 5, **characterized in that** the output torque (A) causes a rotation of the conveying screw about an axis extending substantially in longitudinal direction (LA) of the winter service spreading apparatus (1).

7. The winter service spreading apparatus according to one of claims 2 to 6, **characterized in that** the switchover between the first and second spur gear stage takes place under load.

8. A winter service vehicle comprising a winter service spreading apparatus (1) according to one of the preceding claims.

## Revendications

1. Appareil d'épandage pour service hivernal (1) comprenant un bac de stockage de produit d'épandage (2), au moins un dispositif de transport de produit d'épandage (3) et un dispositif d'épandage (4) équipé de ce dernier comportant au moins un disque d'épandage (5), dans lequel le dispositif de transport de produit d'épandage (3) est entraîné par l'intermédiaire d'au moins une unité de transmission (6), **caractérisé en ce que** l'unité de transmission est conçue comme une boîte de vitesses commandée sous charge (6).

2. Appareil d'épandage pour service hivernal selon la revendication 1, **caractérisé en ce que** la boîte de vitesses commandée sous charge (6) est réalisée sous la forme d'un engrenage droit comportant au moins deux étages d'engrenage.

3. Appareil d'épandage pour service hivernal selon la revendication 2, **caractérisé en ce que** dans le premier étage d'engrenage un accouplement glissant est prévu.

4. Appareil d'épandage pour service hivernal selon une des revendications 1 à 3, **caractérisé en ce que** le dispositif de transport de produit d'épandage (3) est réalisé sous la forme d'un transporteur à vis comportant au moins une vis de transport.

5. Appareil d'épandage pour service hivernal selon une des revendications 1 à 4, **caractérisé en ce que** la boîte de vitesses commandée sous charge (6) est réalisée à partir d'un couple d'entraînement prescrit pour générer un couple de sortie (A).

6. Appareil d'épandage pour service hivernal selon la revendication 5, **caractérisé en ce que** le couple de sortie (A) provoque une rotation de la vis de transport autour d'un axe s'étendant essentiellement dans la direction longitudinale (LA) de l'appareil d'épandage pour service hivernal (1).

7. Appareil d'épandage pour service hivernal selon une des revendications 2 à 6, **caractérisé en ce que** la commutation entre le premier et le deuxième étage d'engrenage a lieu sous charge.

8. Véhicule pour service hivernal comprenant un appareil d'épandage pour service hivernal (1) selon une des revendications précédentes.
